# EUROPÄISCHE PATENTANMELDUNG

(11) **EP 1 498 559 A1**
(43) Veröffentlichungstag der Anmeldung: **19.01.2005**
(21) Anmeldenummer: 04103255.8
(22) Anmeldetag: 08.07.2004
(51) Int. Cl.: E04H 6/14

(54) **Palettenförderanlage**

(30) Priorität: 15.07.2003 AT 10852003
(71) Anmelder: Johann Scholl Gesellschaft m.b.H., A-2523 Tattendorf (AT)
(72) Erfinder: Sliva, Johann, 1100, Wien (AT)
(74) Vertreter: Müllner, Erwin, Dr.

(57) **Zusammenfassung**

Die Palettenförderanlage, beispielsweise für eine PKW-Garage, weist eine umlaufende Gelenkkette (2) auf, die zwischen Führungsschienen (7, 7') geführt ist. Um einen variablen Abstand zwischen benachbarten Paletten zu erzielen, gibt es einen Bereich, in dem der Abstand zwischen den Führungsschienen (7, 7') etwa dem Durchmesser der Kettenrollen (8) entspricht, hier liegen die Kettenglieder geradlinig hintereinander; und es gibt einen Bereich, in dem der Abstand zwischen den Führungsschienen (7, 7') wesentlich größer ist als der Durchmesser der Kettenrollen (8), sodass die Gelenkket-te (2) in diesem Bereich zickzackförmig gefaltet ist. Um einen Längenausgleich zu erzielen, sind im Bereich der zickzackförmig gefalteten Gelenkkette (2) federnd gestützte Schienenverengungen (3, 3') angeordnet.

## Beschreibung

### Technische Gebiet

Die vorliegende Erfindung betrifft eine Palettenförderanlage, die eine umlaufende Gelenkkette aufweist, die zwischen Führungsschienen geführt ist, wobei es einen Bereich gibt, in dem der Abstand zwischen den Führungsschienen etwa dem Durchmesser der Kettenrollen entspricht, und wobei es einen Bereich gibt, in dem der Abstand zwischen den Führungsschienen wesentlich größer ist als der Durchmesser der Kettenrollen, sodass die Gelenkket-te in diesem Bereich zickzackförmig gefaltet ist.

### Stand der Techniek

In der **AT 409396 B** ist ein Transportsystem für mechanische Garagen beschrieben. Es sind dort mehrere Paletten an einer umlaufenden Kette befestigt. Die Kette hat ein oberes Trum und ein unteres Trum, sodass sich die Paletten in zwei Etagen befinden. Auf jeder Palette kann sich ein Auto befinden. Wenn die Kette angetrieben wird, bewegt sich eine Palette der unteren Etage zunächst horizontal, dann im Umlenkbereich der Kette entlang eines Kreisbogens nach oben, dann in der oberen Etage horizontal in der Gegenrichtung und schließlich im anderen Umlenkbereich der Kette entlang eines Kreisbogens wieder nach unten.

Die Kette wird gemäß dieser Schrift zwischen Führungsschienen geführt. Aus geometrischen Gründen kann der Abstand von zwei benachbarten Paletten innerhalb jeder Etage geringer sein als im Umlenkbereich. Dies wird gemäß der genannten Schrift dadurch erreicht, dass der Abstand der Führungsschienen im Bereich des oberen und des unteren Trums größer ist als in den Umlenkbereichen. In den Umlenkbereichen ist der Abstand etwa so groß wie der Durchmesser der Rollen der Kettenglieder, sodass die Kettenglieder alle genau tangential zum Kreisbogen liegen (wie auf einem Zahnrad). Im Bereich des oberen und des unteren Trums ist der Abstand aber wesentlich größer, fast so groß wie die Länge der Kettenglieder, sodass sich die Kettenglieder zickzackförmig aneinander legen.

Modellversuche haben gezeigt, dass durch Fertigungsungenau-igkeiten der Kettenlaschen und bei nicht stetigem Synchron-lauf der Antriebsräder einerseits Zwängungen in den Führungs-schienen der Transportstrecke entstehen, die stellenweise un-erwünschte Überlastungen der Laufrollen hervorrufen, anderer-seits aber auch zu mangelhafter Formschlüssigkeit der Gelenk-ketten in den Führungsschienen der Förderstrecke führen können.

### Offenbarung

### Technisches Problem

Es ist Aufgabe der vorliegenden Erfindung, einen Längenausgleich für eine Gelenkkette in solch einer Palettenförderanlage zu schaffen.

### Technische LÃ¶sung

Diese Aufgabe wird durch eine Palettenförderanlage der eingangs genannten Art erfindungsgemäß dadurch gelöst, dass im Bereich der zickzackförmig gefalteten Gelenkkette federnd gestützte Schienenverengungen angeordnet sind. Dadurch wird bei nicht stetigem Synchronlauf der Antriebsräder bzw. bei Fertigungsungenauig-keiten der Laschen Formschlüssigkeit gewährleistet, und Überlastungen der Laufrollen werden verhindert.

### Zeichnungenbeschreibung

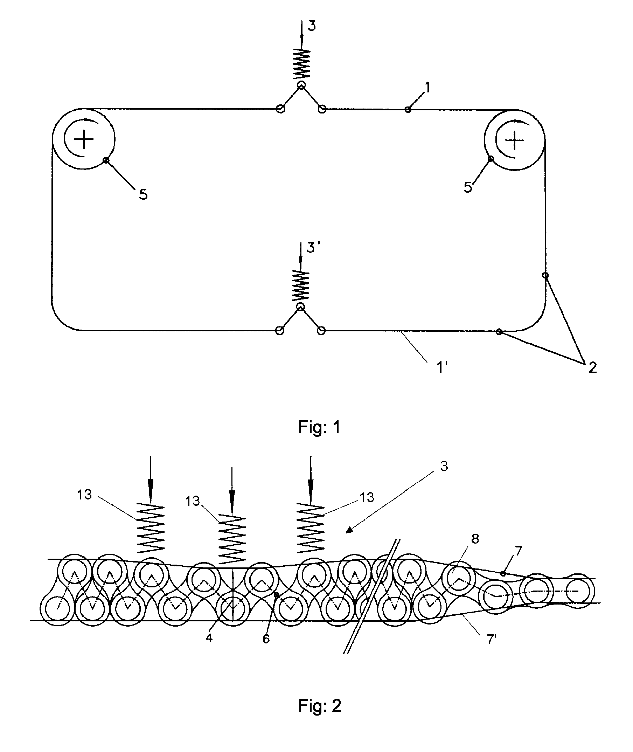

Die erfindungsgemäße Palettenförderanlage wird anhand der beiliegenden Zeichnungen näher erläutert. Es zeigt: Fig. 1 eine erfindungsgemäße Palettenförderanlage sehr stark schematisiert; und Fig. 2 einen Abschnitt mit einer Längenausgleichstation.

### Best Reglerungsform

Fig. 1 zeigt, dass die Förderstrecke, um die die Gelenkskette 2 umläuft, insgesamt etwa die Form eines Rechtecks mit abgerundeten Ecken hat. In zwei der abgerundeten Ecken befinden sich Antriebsräder 5. Gemäß Fig. 1 befindet sich eine federnde Längenausgleichsta-tion 3 im oberen Trum 1 der Gelenkskette 2 zwischen den Antriebsrädern 5; eine weitere federnde Längenausgleichsstation 3' ist im unteren Trum 1' situiert.

In Fig. 2 sieht man, dass ganz rechts der Abstand zwischen den beiden Führungsschienen 7, 7' etwa dem Durchmesser der Laufrollen 8 entspricht. Die Kettenglieder liegen in diesem schmalen Bereich geradlinig hintereinander. Ausgehend von diesem schmalen Bereich vergrößert sich der Abstand zwischen den Führungsschienen 7, 7', sodass die Kettenglieder zickzackförmig angeordnet sind.

Erfindungsgemäß ist nun in einem Abschnitt des breiten Bereichs eine federnde Längenausgleichsstation 3 vorgesehen, wo der Abstand der beiden Führungsschienen 7, 7' veränderbar ist. Im dargestellten Beispiel ist die untere Führungsschiene 7' starr, und die obere Führungsschiene 7 beweglich. Es sind mehrere Federn 13 vorgesehen, die in der Längenausgleichsstation 3 die obere Führungsschiene 7 nach unten drücken. Man erkennt aus Fig. 2, dass die durch die Federn 13 bewirkte Schienenverengung 4 ein Aufklaffen der Laschen 6 bewirkt, bis die Glieder der Gelenk-kette 2 an den Führungsschienen 7, 7' formschlüssig anliegen; zugleich wird eine Über-lastung der Laufrollen 8 verhindert, weil bei zu großen Kräften die Federn 13 nachgeben.

## Patentansprüche

1. Palettenförderanlage, die eine umlaufende Gelenkkette (2) aufweist, die zwischen Führungsschienen (7, 7') geführt ist, wobei es einen Bereich gibt, in dem der Abstand zwischen den Führungsschienen (7, 7') etwa dem Durchmesser der Kettenrollen (8) entspricht, und wobei es einen Bereich gibt, in dem der Abstand zwischen den Führungsschienen (7, 7') wesentlich größer ist als der Durchmesser der Kettenrollen (8), sodass die Gelenkket-te (2) in diesem Bereich zickzackförmig gefaltet ist, **dadurch gekennzeichnet, dass** im Bereich der zickzackförmig gefalteten Gelenkkette (2) federnd gestützte Schienenverengungen (3, 3') angeordnet sind.
